Europäisches Patentamt

European Patent Office

Office européen des brevets

(11) Veröffentlichungsnummer: **0 242 552 B1**

# EUROPÄISCHE PATENTSCHRIFT

(45) Veröffentlichungstag der Patentschrift: **29.05.91**

(51) Int. Cl.5: **B61F 5/52**, F16F 1/36, B60G 11/02

(21) Anmeldenummer: **87103289.2**

(22) Anmeldetag: **07.03.87**

---

(54) **Biegeträger.**

---

(30) Priorität: **11.04.86 DE 3612176**

(43) Veröffentlichungstag der Anmeldung:
**28.10.87 Patentblatt 87/44**

(45) Bekanntmachung des Hinweises auf die
Patenterteilung:
**29.05.91 Patentblatt 91/22**

(84) Benannte Vertragsstaaten:
**BE DE ES FR GB IT**

(56) Entgegenhaltungen:
**EP-A- 0 142 396**
**DE-B- 1 139 703**
**GB-A- 1 041 844**

(73) Patentinhaber: **Messerschmitt-Bölkow-Blohm**
**Gesellschaft mit beschränkter Haftung**
**Robert-Koch-Strasse**
**W-8012 Ottobrunn(DE)**

(72) Erfinder: **Oefner, Walter**
**Palnkamerstrasse 22**
**W-8156 Otterfing(DE)**
Erfinder: **Singer, Gerhard**
**St. Cajetanstrasse 4**
**W-8000 München 80(DE)**

**Beschreibung**

BIEGETRÄGER

Die Erfindung bezieht sich auf einen Biegeträger, insbesondere für den Drehgestellrahmen eines Schienenfahrzeuges, der im Oberbegriff des Anspruchs 1, 2 oder 3 angegebenen Art.

Es sind Schienenfahrzeug-Drehgestellrahmen in Faserverbundbauweise bekannt (DE-A-29 52 182), bei denen die über Querstreben miteinander verbundenen, die Radsätze lagernden Längsträger neben der geforderten Tragfunktion auch die Aufgabe der Primärfederung mitübernehmen und ein vorgegebenes Festigkeits- und sich in Längsrichtung änderndes, von den relativ elastischen Längsträgerenden zur Trägermitte hin zunehmend höheres Steifigkeitsverhalten und zugleich einen großen Torsionswiderstand aufweisen müssen.

Bekannte Faserverbund-Biegeträger aber, die nach Art eines I-Profils mit einem Ober- und einem Untergurt mit jeweils unidirektionaler Faserorientierung und einem als Abstandhalter zwischen den Gurten angeordneten Faserverbund-Schubsteg ausgebildet sind, haben eine gleichbleibend hohe Biegefestigkeit und -steifigkeit und einen sehr niedrigen Torsionswiderstand. Bei solchen Biegeträgern besteht ferner die Schwierigkeit, eine ausreichend sichere Bindung der unidirektionalen Verstärkungsfasern untereinander und zum Schubsteg über die gesamte Biegeträgerlänge zu erzielen, vor allem wenn hohe dynamische Belastungen punktuell in den Biegeträger eingeleitet werden.

Ferner ist aus der EP-A-0 142 396 ein Biegeträger mit einer an den Biegeträger-Enden erhöhten Steifigkeit bekannt, der auf die eingangs genannte Art in der Weise ausgebildet ist, daß die Faserverbund-Schubstege randseitig an den sich über die gesamte Biegeträgerlänge erstreckenden, unidirektionalen Fasersträngen enden und mit diesen über Wickelkörper in den Hohlkammern sowie über zusätzliche Unidirektional-Faserlagen verkoppelt sind, welche an den Biegeträger-Endabschnitten zwischen die Schubstege an die durchlaufenden Faserstränge anlaminiert sind. Eine solche Schubsteg-Anbindung durch gesonderte Wickelkörper und ein die durchlaufenden Faserstränge örtlich aufdickendes Zusatzlaminat im Trägerendbereich ist mit einem erhöhten Fertigungs- und Gewichtaufwand verbunden und hat außerdem zur Folge, daß das für den Biegeträger der beanspruchten Art im Endbereich geforderte, elastische Biegeverhalten beeinträchtigt wird.

Bekannt sind weiterhin Biegefedern aus Faserverbund-Werkstoff, die entweder aus einem unidirektionalen Faserstrang mit in diesen eingebetteten Fasereinlagen bestehen (DE-A-3 119 856) oder mehrschichtig mit einem oberen und einem unteren Unidirektional-Gurt und einer dazwischenliegenden Faserverbund-Abstandsschicht ausgebildet sind, welche mit seitlich vorstehenden Krafteinleitungs-Laschen versehen ist (DE-B-3 238 099). Derartige Biegefedern sind naturgemäß nicht als Biegeträger zu verwenden und haben im Vergleich zu diesen ein, bezogen auf ihre Biege- und Torsionssteifigkeit, sehr hohes Eigengewicht.

Der Erfindung liegt die Aufgabe zugrunde, einen Biegeträger der eingangs genannten Art zu schaffen, der auf baulich und herstellungsmäßig einfache, faserverbundgerechte Weise eine gewichtsoptimale Werkstoffausnutzung und hohe Lastsicherheit und vor allem eine hochgradig sichere Verbundwirkung im Schubsteg-Gurtbereich gewährleistet.

Diese Aufgabe wird erfindungsgemäß durch den in einem der Patentansprüche 1 bis 3 gekennzeichneten Biegeträger gelöst.

Bei dem erfindungsgemäßen Biegeträger wird aufgrund der Einbeziehung der Schubstege in die durchlaufenden Faserstränge eine sehr großflächige Direktverklebung der Schubsteg-Anordnung mit den oberen und unteren Unidirektional-Gurten über die gesamte Schubsteg-Länge und eine wirksame Sicherung dieser Faserstränge gegen ein Aufplatzen unter Last erzielt und zugleich werden Delaminationserscheinungen, die an den zwischen die Schubstege eingreifenden Teilsträngen der durchlaufenden Unidirektional-Gurte durch eine Querschrumpfung der Harzmatrix während des Härtungszyklus oder durch Querzugspannungen auftreten können, dadurch wirksam unterbunden, daß entweder gemäß der ersten Variante der Erfindung zwischen diese Faser-Teilstränge und die randseitigen Schubsteg-Seitenflächen eine querelastische Zwischenschicht in Form eines Folienklebers eingelegt wird, durch die eine schrumpfungs- oder lastbedingte Querkontraktion der Teilstränge ausgeglichen wird, oder gemäß der zweiten Variante der Erfindung in diesen Teilsträngen zwischen den Schubstegen zusätzliche, der erwähnten Querkontraktion der Ober- und Untergurte entgegenwirkende Gewebestreifen angeordnet oder gemäß der dritten Variante zum Querkontraktions-Ausgleich Längsschlitze in den Schubsteg-Randbereichen ausgebildet sind. Durch eine Verbindung der einzelnen Varianten der Erfindung wird ein noch wesentlich wirksamerer Schutz gegen querkontraktionsbedingte Delaminationserscheinungen im Schubsteg-Gurtbereich erzielt, wobei in dieser Hinsicht eine Kombination aus querelastischem Folienkleber und querstabilisierenden Gewebeeinlagen besonders bevorzugt wird.

Aus Gründen eines verbesserten Lastaufnahmeverhaltens haben die Schubstege gemäß den Ansprüchen 4 und 5 vorzugsweise einen quasiisotropen Faserlagenaufbau, d. h. sie besitzen in allen Richtungen der Schubsteg-Ebene annähernd gleiche Festigkeits- und Steifigkeitseigenschaften.

Für eine besonders einfache und lastsichere Krafteinleitung empfiehlt es sich gemäß Anspruch 6, die jeweiligen Lastanschlußstellen des Biegeträgers an den Schubstegen zwischen den oberen und unteren Fasersträngen in der Weise anzubringen, daß die Schubstege örtlich durch mit diesen verklebte, die Hohlkammern durchsetzende Faserverbund-Einsatzstücke verstärkt sind. Im Hinblick auf eine insbesondere für eine Schraubbolzenbefestigung ausreichend verspannungssichere Ausbildung der Einsatzstücke haben diese gemäß Anspruch 7 zweckmäßigerweise eine quer zur Trägerlängsrichtung im wesentlichen senkrecht zur Flächenerstreckung der Schubstege verlaufende Faserorientierung.

Um dem Biegeträger auf sehr einfache, gewichtssparende Weise ein vorgegebenes, sich in Längsrichtung änderndes Elastizitätsverhalten mit der geforderten, relativ hohen Biegesteifigkeit im Bereich der Biegeträgermitte zu verleihen, besitzt die Steganordnung gemäß Anspruch 8 vorzugsweise eine dementsprechend ungleichförmige sich zu den Biegeträgerenden hin verringernde Steghöhe, während die oberen und unteren, durchlaufenden Faserstränge eine über die gesamte Biegeträgerlänge im wesentlichen konstante Querschnittskonfiguration aufweisen, so daß sich ein in Biegeträger-Längsrichtung nahezu gleichförmiger Biegespannungsverlauf ergibt.

In weiterer vorteilhafter Ausgestaltung der Erfindung sind gemäß Anspruch 9 als Stützkörper zwischen die Schubstege in die Hohlkammern Schaumstoffteile eingesetzt, die mit den Schubstegen direktverklebt sind, wodurch der Biegeträger im Schubstegbereich auf herstellungsmäßig einfache Weise nach Art einer in Breitenrichtung des Biegeträgers vielfach geschichteten Sandwichstruktur ausgebildet und das Lastaufnahmeverhalten des Biegeträgers ohne nennenswerte Gewichtserhöhung deutlich verbessert wird.

Die Erfindung wird nunmehr anhand eines Ausführungsbeispiels in Verbindung mit den Zeichnungen näher erläutert. Es zeigen in schematischer Darstellung:

**Fig. 1** Die Aufsicht eines Drehgestellrahmens in Faserverbundbauweise;

**Fig. 2** Die Seitenansicht eines Biegeträgers des Drehgestellrahmens gemäß Fig. 1;

**Fig. 3** Einen Schnitt des Biegeträgers längs der Linie III-III der Fig. 2;

**Fig. 4** Einen vergrößerten Teilschnitt der Fig. 3 im Bereich des oberen unidirektionalen Faserstrangs;

**Fig. 5** Einen Teilschnitt des Biegeträgers längs der Linie V-V der Fig. 2;

**Fig. 6** Einen Teilschnitt längs der Linie VI-VI der Fig. 5.

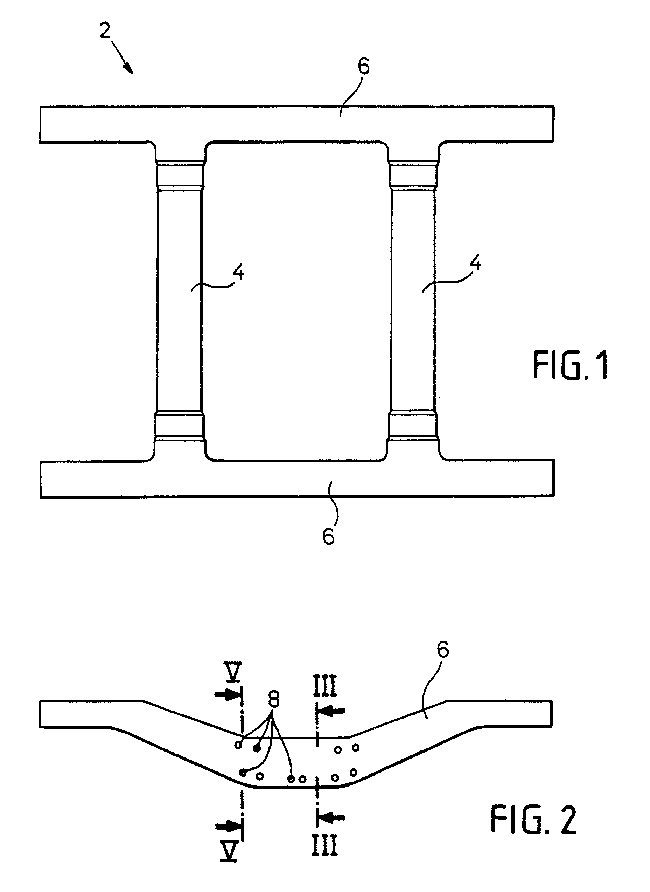

Der in Fig. 1 gezeigte Drehgestellrahmen 2 aus Faserverbundwerkstoff besteht aus zwei, durch Querträger 4 miteinander verbundenen Biegeträgern 6, die an ihren Enden die (nicht gezeigten) Radsatzachsen lagern und in der Biegeträgermitte mit Lasteinleitungsstellen in Form von Durchgangsbohrungen 8 (Fig. 2) versehen sind, an denen die aus der Wagenkastenabstützung und -anlenkung resultierenden Lasten z. B. über ebenfalls nicht gezeigte Metallbeschläge und Spannbolzen in den Biegeträger 6 eingeleitet werden. Von den Biegeträgern 6 wird neben der Tragfunktion zusätzlich auch die Aufgabe der Primärfederung mitübernommen, d. h. sie müssen außer einem vorgegebenen Festigkeits- auch ein definiertes Steifigkeitsverhalten besitzen, nämlich hochgradig torsionssteif und in der Ebene des Drehgestellrahmens biegesteif sein und zugleich in Vertikalrichtung, also senkrecht zur Drehgestellebene, ein sich über die Länge des Biegeträgers 6 in vorgegebener Weise änderndes Elastizitätsverhalten aufweisen, derart, daß sie an den Biegeträgerenden relativ biegeelastisch, im Bereich der Biegeträgermitte hingegen sehr biegesteif ausgebildet sind.

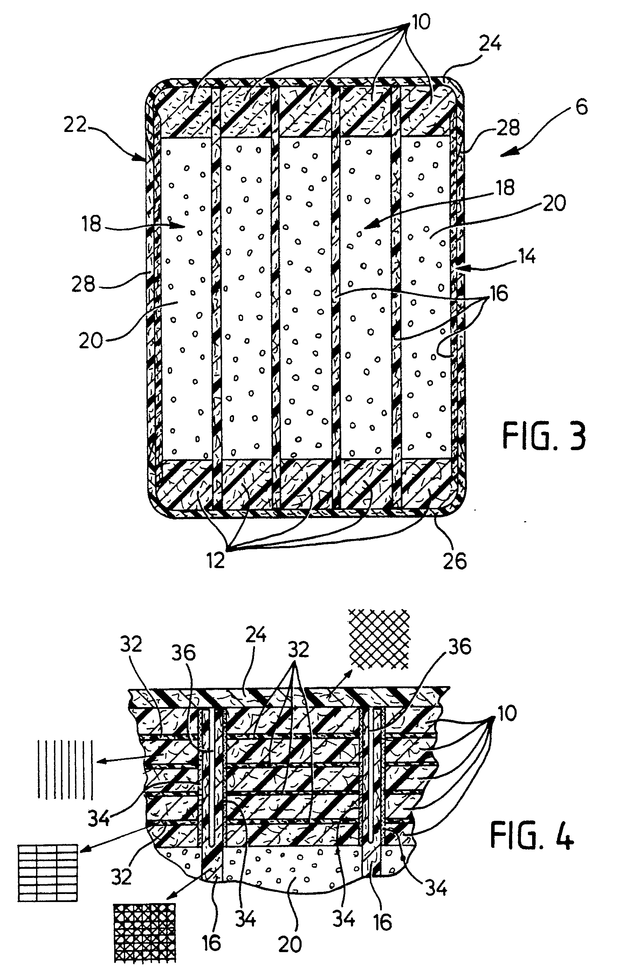

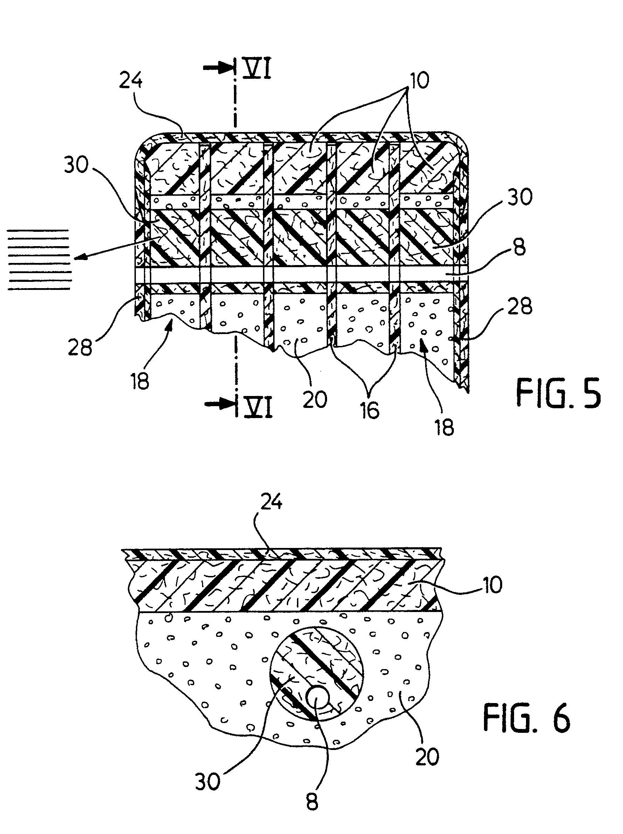

Um diesen Festigkeits- und Steifigkeitsanforderungen auf faserverbundgerechte, gewichtssparende Weise zu entsprechen, haben die Biegeträger 6 den im einzelnen in den Fign. 3 - 6 gezeigten Innenaufbau: sie enthalten jeweils einen Ober- und einen Untergurt 10, 12 in Form eines sich mit konstantem Querschnitt und unidirektionaler Faser-Orientierung über die gesamte Biegeträgerlänge erstreckenden Faserstrangs sowie eine die Faserstränge 10, 12 auf Abstand haltende Schubsteganordnung 14, die aus einer Vielzahl von lamellenartig über die Breite des Biegeträgers 6 verteilten, aufrecht stehenden, durchgehend zwischen den Biegeträgerenden verlaufenden dünnwandigen Einzelstegen 16 besteht, welche jeweils einen quasiisotropen Faserlagenaufbau, also etwa die in Fig. 4 in Kreuzschraffur angedeutete 0°-, 90°- und ± 45°-Faserorientierung besitzen.

Entsprechend dem gewünschten Elastizitätsverhalten des Biegeträgers ändert sich die Höhe der Steganordnung 14 in Biegeträgerlängsrichtung, d. h. die Einzelstege 16 haben eine sich zu den Biegeträgerenden hin verringernde Steghöhe, wobei die oberen und unteren Randbereiche der Stege 16 sich in die unidirektionalen Faserstränge 10, 12 hineinerstrecken und mit diesen flächig verklebt sind, um eine gute Verbindung der Schubsteg-Anordnung 14 zu den Fasersträngen 10, 12 und einen wirksamen Schutz dieser Faserstränge gegen ein Aufplatzen unter Last zu erreichen. Die von den Stegen 16 begrenzten Hohlkammern 18 sind mit Schaumstoffstreifen 20, z. B. aus warmfesten Polyimid-Schaum, ausgefüllt.

Auf der Außenseite sind die Faserstränge 10, 12 und die Schubsteg-Anordnung 14 von einer torsionsversteifenden Faserverbund-Deckhaut 22 umschlossen, die aus einem oberen und einem unteren, U-förmigen Schalenteil 26, 26 und zwischen diesen eingeschäfteten, seitlichen Torsionshautteilen 28 besteht, in welchen die Fasern bezüglich der Biegeträger-Längsrichtung unter ± 45° verlaufen, wie dies in Fig. 4 wiederum durch die zugeordnete Kreuzschraffur angedeutet ist.

Wie die Fign. 5 und 6 zeigen, sind die Lasteinleitungsbohrungen 8 an den Schubstegen 16 im Bereich der Hohlkammern 18 ausgebildet, wobei zur örtlichen Verstärkung der Schubstege 16 Faserverbund-Einsatzstücke 30 vorgesehen sind, die die Hohlkammern 18 durchsetzen und beidseitig mit den zugeordneten Schubstegen 16 verklebt sind. Der Lagenaufbau der Einsatzstücke 30 ist so gewählt, daß sie Druckkräfte, die durch das Anschrauben der Lasteinleitungsbeschläge entstehen, aufnehmen. Zu diesem Zweck haben die Einsatzstücke 30 die in Fig. 5 angedeutete, senkrecht zur Flächenerstreckung der Schubstege 16 verlaufende Faserorientierung.

Zur Herstellung des Biegeträgers 6 werden zunächst die einzelnen Schaumstoffstreifen 20 auf Kontur beschnitten und auf Dicke bearbeitet und dann an den Krafteinleitungsstellen mit Aussparungen versehen, in die die zuvor ausgehärteten und auf die Dicke der einzelnen Schaumstoffstreifen 20 zugeschnittenen Einsatzstücke 30 eingefügt werden. Anschließend werden die ebenfalls bereits ausgehärteten und zugeschnittenen Schubstege 16 mit den Schaumstoffstreifen 20 und den in diesen angeordneten Einsatzstücken 30 verklebt. Der so entstehende Teilzusammenbau ist nach Art einer vielschichtigen Sandwichstruktur gegliedert und bildet den Faserverbundkern des Biegeträgers 6, wobei die oberen und unteren Schubsteg-Randbereiche frei über den Faserverbundkern vorstehen.

Zwischen die frei vorstehenden Schubsteg-Randbereiche werden dann die oberen und unteren unidirektionalen Faserstränge 10, 12 in noch ungehärtetem Zustand eingelegt und anschließend wird die Torsionshaut 22 aus ebenfalls noch ungehärtetem Faserverbundwerkstoff aufgebracht. Nach dem gleichzeitigen Aushärten der Faserstränge 10, 12 und der Torsionshaut 22 werden die Lasteinleitungsstellen 8 verbohrt, und zwar exzentrisch zur Mittelachse der Einsatzstücke 30, um diese während des Bohrvorganges gegen ein Verdrehen zu sichern.

Gemäß Fig. 4 sind in die unidirektionalen Faserstränge 10 (und auch 12) in regelmäßigen Abständen zueinander parallele, sich über die gesamte Länge der Faserstränge 10, 12 querverlaufend zwischen den Schubstegen 16 erstreckende Gewebestreifen 32 eingelegt, die gemeinsam mit den Fasersträngen 10, 12 ausgehärtet werden und deren Verstärkungsfasern hauptsächlich senkrecht zur Flächenerstreckung der Schubstege 16 gerichtet sind, wie dies durch die in dieser Richtung höhere Faserdichte der zugeordneten Kreuzschraffur in Fig. 4 angedeutet ist. Durch diese Gewebestreifen 32 wird die Schrumpfung der Harzmatrix der unidirektionalen Faserstränge 10, 12 während des Härtungszyklus senkrecht zu den bereits zuvor ausgehärteten und durch die Schaumstoffstreifen 20 und die Einsatzstücke 30 in festem Abstand zueinander gehaltenen Schubstegen 16 behindert und eine gute, großflächige, delaminationsfreie Verklebung der Schubsteg-Randbereiche mit den angrenzenden unidirektionalen Faser-Teilsträngen garantiert. Wahlweise oder - bei größeren Abständen zwischen den Schubstegen 16 - auch zusätzlich kann zu dem gleichen Zweck zwischen die Schubsteg-Randbereiche und die angrenzenden Faser-Teilstränge auch ein Folienkleber 34 (Fig. 4) eingefügt werden, der eine in Querrichtung der Schubstege 16 elastische Zwischenschicht bildet, durch die während des Härtungszyklus schrumpfungsbedingte Ablöseerscheinungen verhindert werden, und/oder die Schubstege 16 können an ihren über die Schaumstoffstreifen 20 vorstehenden Randbereichen zum Schrumpfungsausgleich durch mittige, sich einseitig zur Stegober- bzw. -unterkante öffnende Längsschlitze 36 in Steg-Dickenrichtung nachgiebig ausgebildet sein.

## Ansprüche

1. Biegeträger, insbesondere für den Drehgestellrahmen eines Schienenfahrzeuges, bestehend aus einer zumindest in der Biegeträgermitte relativ biegesteifen, an den Biegeträger-Endabschnitten elastisch ausgebildeten Faserverbundstruktur mit einem oberen und einem unteren, als Ober- bzw. Untergurt mit jeweils in Trägerlängsrichtung unidirektionaler Faserrichtung ausgebildeten und sich über die gesamte Biegeträgerlänge erstreckenden Faserstrang (10, 12) und mit einem zwischen den Fasersträngen als Abstandhalter angeordneten Faserverbundkern, der aus lamellenartig über die Biegeträgerbreite verteilten, zwischen sich jeweils in Trägerlängsrichtung verlaufende Hohlkammern (18) begrenzenden Faserverbund-Schubstegen (16) mit einer zur Trägerlängsrichtung geneigten Faserorientierung zusammengesetzt ist,
dadurch **gekennzeichnet,** daß
die Schubstege (16) randseitig in den oberen und den unteren Faserstrang verlaufen und in diesen dadurch eingebunden sind, daß die Schubsteg-Randbereiche mit den Fasersträngen durch eine in Querrichtung der Schubstege elastische Klebstoffverbindung in Form eines Folienklebers (34) verkoppelt sind.

2. Biegeträger, insbesondere für den Drehgestellrahmen eines Schienenfahrzeuges, bestehend aus einer zumindest in der Biegeträgermitte relativ biegesteifen, an den Biegeträger-Endabschnitten elastisch ausgebildeten Faserverbundstruktur mit einem oberen und einem unteren, als Ober- bzw. Untergurt mit jeweils in Trägerlängsrichtung unidirektionaler Faserrichtung ausgebildeten und sich über die gesamte Biegeträgerlänge erstreckenden Faserstrang (10, 12) und mit einem zwischen den Fassersträngen als Abstandhalter angeordneten Faserverbundkern, der aus lamellenartig über die Biegeträgerbreite verteilten, zwischen sich jeweils in Trägerlängsrichtung verlaufende Hohlkammern (18) begrenzenden Faserverbund-Schubstegen (16) mit einer zur Trägerlängsrichtung geneigten Faserorientierung zusammengesetzt ist,
dadurch **gekennzeichnet, daß**
die Schubstege (16) randseitig in den oberen und den unteren Faserstrang verlaufen und in diesen eingebunden sind, und daß in die Faserstränge jeweils zueinander parallele, sich über die Länge der Faserstränge querverlaufend zwischen den Schubstegen erstreckende Gewebestreifen (32) mit zur Flächenerstreckung der Schubstege im wesentlichen senkrechter Faserorientierung eingelegt sind.

3. Biegeträger, insbesondere für den Drehgestellrahmen eines Schienenfahrzeuges, bestehend aus einer zumindest in der Biegeträgermitte relativ biegesteifen, an den Biegeträger-Endabschnitten elastisch ausgebildeten Faserverbundstruktur mit einem oberen und einem unteren, als Ober- bwz. Untergurt mit jeweils in Trägerlängsrichtung unidirektionaler Faserrichtung ausgebildeten und sich über die gesamte Biegeträgerlänge erstreckenden Faserstrang (10, 12) und mit einem zwischen den Fassersträngen als Abstandhalter angeordneten Faserverbundkern, der aus lamellenartig über die Biegeträgerbreite verteilten, zwischen sich jeweils in Trägerlängsrichtung verlaufende Hohlkammern (18) begrenzenden Faserverbund-Schubstegen (16) mit einer zur Trägerlängsrichtung geneigten Faserorientierung zusammengesetzt ist,
dadurch **gekennzeichnet, daß**
die Schubstege (16) randseitig in den oberen und den unteren Faserstrang verlaufen und in diesen eingebunden sind, und daß die Schubsteg-Randbereiche durch in diese mittig eingebrachte, sich einseitig zur Stegober- bzw. -unterkante öffnende Längsschlitze (36) in Steg-Dickenrichtung nachgiebig ausgebildet sind.

4. Biegeträger nach einem der vorhergehenden Ansprüche,
dadurch **gekennzeichnet, daß**
die Schubstege (16) eine sich kreuzende quasiisotrope Faserorientierung aufweisen.

5. Biegeträger nach Anspruch 4,
dadurch **gekennzeichnet, daß**
die Faserorientierung der Schubstege (16) bezüglich der Trägerlängsrichtung $0°$, $90°$ und $\pm 45°$ beträgt.

6. Biegeträger nach einem der vorhergehenden Ansprüche,
dadurch **gekennzeichnet, daß**
zumindest einige Lastanschlußstellen (8) des Biegeträgers (6) zwischen dem oberen und dem unteren Faserstrang (10 und 12) an den Schubstegen (16) ausgebildet sind, wobei die Schubstege örtlich durch stegseitig verklebte, die Hohlkammern (18) überbrückende Faserverbund-Einsatzstücke (30) verstärkt sind.

7. Biegeträger nach Anspruch 6,
dadurch **gekennzeichnet, daß**
die Einsatzstücke (30) eine im wesentlichen senkrecht zur Flächenerstreckung der Schubstege (16) verlaufende Faserorientierung aufweisen.

8. Biegeträger nach einem der vorhergehenden Ansprüche,
dadurch **gekennzeichnet, daß**
die Schubstege (16) eine sich entsprechend dem Steifigkeitsverhalten des Biegeträgers (6) ändernde, zur Biegeträgermitte hin zunehmende Steghöhe besitzen.

9. Biegeträger nach einem der vorhergehenden Ansprüche,
dadurch **gekennzeichnet, daß**
die Hohlkammern (18) mit einem Füll-, insbesondere Schaumstoff (20) ausgefüllt sind.

**Claims**

1. Flexible support, in particular for the bogie frame of a rail vehicle, comprising a composite fibre structure, which is formed flexurally relatively stiff at least in the flexible-support centre and elastic at the flexible-support end sections, with an upper and a lower fibre strand (10, 12) constructed as an upper or lower strap respectively and each arranged with a unidirectional fibre orientation in the support's longitudinal direction and extending over the entire flexible-support length, and with a composite fibre core arranged as spacer between the fibre strands, which core is composed of composite fibre shear webs (16), which are spaced lamellar-like across the flexible-support breadth, which define between themselves cavities (18) extending in the support's longitudinal direction, and which have a fibre orientation inclined relative to the support's longitudinal direction, characterised in that the shear webs (16) extend at their edges into the upper and the lower fibre strands and are bound into same in that the shear web edge regions are coupled to the fibre strands by an adhesive connection in the form of a foil adhesive which is elastic in the direction across the shear webs.

2. Flexible support, in particular for the bogie frame of a rail vehicle, comprising a composite fibre structure, which is formed flexurally relatively stiff at lease in the flexible-support centre and elastic at the flexible-support end sections, with an upper and a lower fibre strand (10, 12) constructed as an upper or lower strap respectively and each arranged with a unidirectional fibre orientation in the support's longitudinal direction and extending over the entire flexible-support length, and with a composite fibre core arranged as spacer between the fibre strands, which core is composed of composite fibre shear webs (16), which are spaced lamellar-like across the flexible-support breadth, which define between themselves cavities (18) extending in the support's longitudinal direction, and which have a fibre orientation inclined relative to the support's longitudinal direction, characterised in that the shear webs (16) extend at the edges into the upper and the lower fibre strands and are bound into same, and that webbing strips (32), which are parallel relative to one another and have a substantially vertical fibre orientation relative to the surface expanse of the shear webs, are arranged in the fibre strands.

3. Flexible support, in particular for the bogie frame of a rail vehicle, comprising a composite fibre structure, which is formed flexurally relatively stiff at least in the flexible-support centre and elastic at the flexible-support end sections, with an upper and a lower fibre strand (10, 12) constructed as an upper or lower strap respectively and each arranged with a unidirectional fibre orientation in the support's longitudinal direction and extending over the entire flexible-support length, and with a composite fibre core arranged as spacer between the fibre strands, which core is composed of composite compound shear webs (16), which are spaced lamellar-like across the flexible-support breadth, which define between themselves cavities (18) extending in the support's longitudinal direction, and which have a fibre orientation inclined towards the support's longitudinal direction, characterised in that the shear webs (16) extend at the edges into the upper and the lower fibre strands and are bound into same, and that the shear web edge regions are constructed to be resilient in the web's direction of thickness by means of centrally disposed longitudinal slots (36) which open singlesidedly towards the upper or lower edge of the web.

4. Flexible support according to one of the preceding claims, characterised in that the shear webs (16) have a cross-wise quasi-isotrop fibre orientation.

5. Flexible support according to claim 4, characterised in that the fibre orientation of the shear webs (16) relative to the support's longitudinal direction is 0°, 90° and ±45°.

6. Flexible support according to one of the preceding claims, characterised in that at least some load-connecting points (8) of the flexible support (6) are arranged between the upper and the lower fibre strands (10, 12) at the shear webs (16), in which respect the shear webs are locally reinforced by composite fibre inserts (30), which are glued to the web sides and bridge the cavities (18).

7. Flexible support according to claim 6, characterised in that the inserts (30) have a fibre orientation which is substantially vertical to the surface expanse of the shear webs (16).

8. Flexible support according to one of the preceding claims, characterised in that the shear webs (16) have a web height which increases towards the flexible-support centre corresponding to the change in rigidity performance of the flexible support (6).

9. Flexible support according to one of the preceding claims, characterised in that the cavities (18) are filled with a filler substance, in particular foam material (20).

## Revendications

1. Poutre sollicitée en flexion, en particulier pour le châssis d'un bogie d'un véhicule sur rail, composée d'une structure composite renforcée par fibres relativement rigide à la flexion, au moins au milieu de la poutre sollicitée en flexion, et élastique au niveau des parties terminales de la poutre sollicitée en flexion, avec des barres de fibres supérieure et inférieure (10, 12) qui sont réalisées sous forme de semelles supérieure et inférieure avec une orientation des fibres unidirectionnelle dans la direction longitudinale de la poutre et s'étendent sur toute la longueur de la poutre sollicitée en flexion, et comprenant un coeur composite renforcé par fibres, qui est disposé entre les barres de fibres en tant que dispositif d'espacement et est composé de plaques de renforcement composites renforcées par fibres (16) dont les fibres sont inclinées par rapport à la direction longitudinale de la poutre, qui sont réparties comme des lamelles sur la largeur de la poutre sollicitée en flexion et délimitent entre elles des chambres creuses (18) s'étendant chacune dans la direction longitudinale de la poutre, caractérisée en ce que les plaques de renforcement (16) s'étendent au niveau de leurs bords dans la barre de fibres supérieure et inférieure et y sont intégrées par le fait que les bords des plaques de renforcement sont couplés avec les barres de fibres par un assemblage collé qui est élastique dans la direction transversale des plaques de renforcement et se présente sous la forme d'une colle pour film (34).

2. Poutre sollicitée en flexion, en particulier pour le châssis d'un bogie d'un véhicule sur rail, composée d'une structure composite renforcée par fibres relativement rigide à la flexion, au moins au milieu de la poutre sollicitée en flexion, et élastique au niveau des parties terminales de la poutre sollicitée en flexion avec des barres de fibres supérieure et inférieure (10, 12) qui sont réalisées sous forme de semelles supérieure et inférieure avec une orientation des fibres unidirectionnelle dans la direction de la poutre et s'étendent sur toute la longueur de la poutre sollicitée en flexion et comprenant un coeur composite renforcé par fibres qui est disposé entre les barres de fibres en tant que dispositif d'espacement et est composé de plaques de renforcement composites renforcées par fibres (16) dont les fibres sont inclinées par rapport à la direction longitudinale de la poutre, qui sont réparties comme des lamelles sur la largeur de la poutre sollicitée en flexion et délimitent entre elles des chambres creuses (18) s'étendant chacune dans la direction longitudinale de la poutre, caractérisée en ce que les plaques de renforcement (16) s'étendent au niveau de leurs bords dans les barres de fibres supérieure et inférieure et y sont intégrées et en ce que des bandes de tissu (32) parallèles entre elles, s'étendant sur la longueur des barres de fibres transversalement entre les plaques de renforcement sont mises en place dans les barres de fibres, l'orientation de leurs fibres étant essentiellement perpendiculaire à la direction des plaques de renforcement.

3. Poutre sollicitée en flexion, en particulier pour le châssis d'un bogie d'un véhicule sur rail, composée d'une structure composite renforcée par fibres relativement rigide à la flexion, au moins au milieu de la poutre sollicitée en flexion, et élastique au niveau des parties terminales de la poutre sollicitée en flexion avec des barres de fibres supérieure et inférieure (10, 12) qui sont réalisées sous forme de semelles supérieure et inférieure avec une orientation des fibres unidirectionnelle dans la direction de la poutre et s'étendent sur toute la longueur de la poutre sollicitée en flexion et comprenant un coeur composite renforcé par fibres qui est disposé entre les barres de fibres en tant que dispositif d'espacement et est composé de plaques de renforcement composites renforcées par fibres (16) dont les fibres sont inclinées par rapport à la direction longitudinale de la poutre, qui sont réparties comme des lamelles sur la largeur de la poutre sollicitée en flexion et délimitent entre elles des chambres creuses (18) s'étendant chacune dans la direction longitudinale de la poutre, caractérisée en ce que les plaques de renforcement (16) s'étendent au niveau de leurs bords dans les barres de fibres supérieure et inférieure et y sont intégrées et en ce que les bords des plaques de renforcement sont rendus flexibles dans la direction de l'épaisseur de la plaque par des fentes longitudinales (36) réalisées au milieu desdits bords et s'ouvrant unilatéralement vers le bord supérieur et le bord inférieur de la plaque.

4. Poutre sollicitée en flexion selon l'une des revendications précédentes, caractérisée en ce que les fibres des plaques de renforcement (16) présentent une orientation quasi isotrope et se croisent.

5. Poutre sollicitée en flexion selon la revendication 4, caractérisée en ce que l'orientation des fibres des plaques de renforcement (16) est de 0°, 90° et ± 45° par rapport à la direction longitudinale de la poutre.

6. Poutre sollicitée en flexion selon l'une des revendications précédentes, caractérisée en ce que au moins quelques points d'application de charge (8) de la poutre sollicitée en flexion (6) sont réalisés sur les plaques de renforcement (16) entre les barres de fibres supérieure et inférieure (10 et 12), les plaques de renforcement étant renforcées localement par des inserts composites renforcés par fibres (30) collés côté plaque et passant au-dessus des chambres creuses (18).

7. Poutre sollicitée en flexion selon la revendication 6, caractérisée en ce que les inserts (30) présentent une orientation de fibres essentiellement perpendiculaire à la surface des plaques de renforcement (16).

8. Poutre sollicitée en flexion selon l'une des revendications précédentes, caractérisée en ce que les plaques de renforcement (16) possèdent une hauteur qui évolue en fonction du comportement de rigidité de la poutre sollicitée en flexion (6) et augmente vers le milieu de la poutre sollicitée en flexion.

9. Poutre sollicitée en flexion selon l'une des revendications précédentes, caractérisée en ce que les chambres creuses (18) sont remplies d'une substance de remplissage, en particulier de mousse (20).

2

6

4

4

FIG.1

6

V

III

8

III

V

6

FIG. 2

FIG. 3

FIG. 4

FIG. 5

FIG. 6